(19) Europäisches Patentamt / European Patent Office / Office européen des brevets

(11) **EP 4 722 786 A1**

(12) **EUROPEAN PATENT APPLICATION**
published in accordance with Art. 153(4) EPC

(43) Date of publication:
**08.04.2026 Bulletin 2026/15**

(21) Application number: **24853630.2**

(22) Date of filing: **07.08.2024**

(51) International Patent Classification (IPC):
***G02B 27/01*** (2006.01)

(86) International application number:
**PCT/CN2024/110324**

(87) International publication number:
**WO 2025/036219 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.08.2023 CN 202311027133**

(71) Applicant: Goertek Optical Technology Co., Ltd.
**Weifang, Shandong 261031 (CN)**

(72) Inventors:
- SONG, Wenbao
  Weifang, Shandong 261031 (CN)
- LIU, Dean
  Weifang, Shandong 261031 (CN)
- WANG, Wanrong
  Weifang, Shandong 261031 (CN)

(74) Representative: ABG Intellectual Property Law, S.L.
Avenida de Burgos, 16D
Edificio Euromor
28036 Madrid (ES)

(54) **OPTICAL MODULE AND HEAD-MOUNTED DISPLAY DEVICE**

(57) Embodiments of the present application provide an optical module and a head-mounted display device. The optical module comprises a display, a first imaging element, and a second imaging element. The first imaging element comprises a lens group arranged along the same optical axis, and a light splitting element, a first phase retarder and a first polarization reflector which are sequentially arranged between optical paths of the lens group. A first included angle is formed between the optical axis of the first imaging element and the central axis of the display, and the focal power $\phi_1$ of the first imaging element is zero. The second imaging element comprises a turning element and a second polarization reflector arranged on any side of the turning element, the second imaging element is located between the display and the first imaging element, and a second included angle is formed between the second imaging element and the optical axis of the first imaging element. According to a novel optical framework provided by the embodiments of the present application, a folding optical path matches the turning element, so that an AR optical scheme that a virtual picture and a real picture share an optical path is realized.

FIG. 1

**Description**

## TECHNICAL FIELD

The present disclosure relates to the field of optical imaging technology, and more specifically, to an optical module and a head-mounted display device.

## BACKGROUND

Augmented reality (AR) technology uses a near-eye display scheme to overlay virtual images onto real-world scenes, providing users with an immersive and interactive experience. Currently, diffractive waveguides are commonly used as display schemes for augmented reality technology.

However, existing diffractive waveguides have some inherent drawbacks, such as low system efficiency and varying efficiency due to different propagation paths of light rays at different field of view. In other words, existing diffractive waveguides suffer from poor display quality.

## SUMMARY

The purpose of the present disclosure is to provide a new technical solution for an optical module and a head-mounted display device.

In a first aspect, the present disclosure provides an optical module. The optical module includes:

a display;

a first imaging element including a lens group arranged along a same optical axis, and a beam splitter, a first phase retarder and a first polarizing reflector arranged sequentially between lens elements of the lens group, wherein an optical axis of the first imaging element forms a first angle with a central axis of the display, and an optical power $\phi 1$ of the first imaging element is zero; and

a second imaging element including an turning element and a second polarizing reflector disposed on either side of the turning element, wherein the second imaging element is located between the display and the first imaging element and forms a second angle with the optical axis of the first imaging element.

Optionally, an optical power $\phi 2$ of the second imaging element is zero.

Optionally, the optical module further includes a second phase retarder, and the second phase retarder is located between the second polarizing reflector and the lens group.

Optionally, the lens group includes at least two mutually cemented lenses to form a cemented lens group, and the cemented lens group forms a flat lens group which has zero optical power.

Optionally, the lens group includes a first lens, a second lens and a third lens cemented in sequence, a combined optical power of the first lens, the second lens and the third lens is zero, and a surface of the first lens facing away from the second lens and a surface of the third lens facing away from the second lens have the same surface type; and

The surface of the first lens facing away from the second lens and the surface of the third lens facing away from the second lens are both flat surface, or curved surface and bent to the same side.

Optionally, the second phase retarder is located within the first imaging element and is disposed on the surface of the third lens facing away from the second lens.

Optionally, the second polarizing reflector is disposed on the surface of the turning element close to the display.

Optionally, the turning element is a flat element with zero optical power.

Optionally, the beam splitter is cemented and disposed between the second lens and the third lens; and the first phase retarder and the first polarizing reflector are stacked with each other, and cemented between the second lens and the first lens.

Optionally, the optical module further includes a first polarizer, wherein the first polarizer is disposed at a side of the first polarizing reflector facing away from the first phase retarder; and

the first polarizer, the first polarizing reflector, and the first phase retarder are stacked in sequence to form a composite film.

Optionally, the optical module is applied to an AR device.

Optionally, the display emits and transmits a first light ray to the second polarizing reflector; and

the second polarizing reflector reflects a horizontal polarization component of the first light ray to form horizontally linearly polarized light, which passes through the second phase retarder; and

the second phase retarder converts the horizontal linearly polarized light into left-hand circularly polarized light, the left-hand circularly polarized light is reflected back between the beam splitter of the first imaging element and the first polarizing reflector, and finally emitted through the first lens to the aperture.

Optionally, a second light from the outside is incident into the turning element, the second polarizing reflector modulates the second light ray into vertically linear polarized light, and the vertically linear polarized light passes through the second phase retarder; and the second phase retarder converts the vertically linear polarized light into right-hand circularly polarized light, the right-hand circularly polarized light is incident into the first imaging element and is converted into vertically linear polarized light by the first phase retarder, and after passing through the first polarizing reflector and the first lens, the converted vertically linear polarized light is incident on the aperture.

Optionally, focal length of the optical module is F, and thickness of the first imaging element along the optical axis is D, and D and F satisfy: $0.3 \leq D/F \leq 0.6$.

Optionally, absolute values of radii of curvature of two surfaces of the first lens and the second lens cemented to each other are C1, and absolute values of radii of curvature of two surfaces of the second lens and the third lens cemented to each other are C2, then $-0.6 \leq (C1-C2)/C1 \leq 0.6$.

In a second aspect, the present disclosure provides a head-mounted display device. The head-mounted display device includes:

a housing; and

the optical module as described in the first aspect.

The beneficial effects of the present disclosure are as follows:
According to an embodiment of the present disclosure, a novel AR near-eye display optical architecture is provided. The optical architecture includes a real display, a turning element provided with a polarizing reflector, and a group of folded optical path modules. The entire optical architecture achieves that virtual image light ray and real image light ray transmit through the shared optical path by combining the folded optical path and the turning element, thereby realizing augmented reality display with excellent imaging quality.

Other features and advantages of this specification will become clear from the following detailed description of exemplary embodiments with reference to the accompanying drawings.

## BRIEF DESCRIPTION OF THE DRAWINGS

The accompanying drawings, which are incorporated in and form part of this specification, illustrate embodiments of this specification and, together with their description, serve to explain the principles of this specification.

Fig. 1 is an optical architecture diagram of the optical module provided in an embodiment of the present disclosure;

Fig. 2 shows the modulation transfer function (MTF) curve graph of the optical module provided in the embodiment of the present disclosure at 450 nm.

Fig. 3 shows the modulation transfer function (MTF) curve graph of the optical module provided in the embodiment of the present disclosure at 540 nm.

Fig. 4 shows the modulation transfer function (MTF) curve graph of the optical module provided in the embodiment of the present disclosure at 610 nm.

Explanation of reference numerals:

01. Aperture; 001. First light ray;

1. Display; 2. First lens; 3. Second lens; 4. Third lens; 5. Second phase retarder; 6. Turning element; 7. Second polarizing reflector; 8. First polarizing reflector; 9. First phase retarder; 10. Beam splitter; 11. First polarizer.

## DETAILED DESCRIPTION OF THE EMBODIMENTS

Various exemplary embodiments of the present application will now be described in detail with reference to the accompanying drawings. It should be noted that, unless otherwise specifically stated, the relative arrangement, numerical expressions, and values of the components and steps set forth in these embodiments do not limit the scope of the present application.

The following description of at least one exemplary embodiment is merely illustrative and is in no way intended to limit the scope of the present disclosure and its application or use.

Technologies and equipment known to those skilled in the art may not be discussed in detail, but where appropriate, such technologies and equipment should be considered part of the specification.

In all the examples shown and discussed herein, any specific values should be interpreted as merely exemplary and not as limitations. Therefore, other examples of exemplary embodiments may have different values.

It should be noted that similar labels and letters in the following figures indicate similar items; therefore, once an item is defined in one figure, it does not need to be discussed further in subsequent figures.

The optical module and head-mounted display device provided in the embodiments of the present disclosure will be described in detail below with reference to the accompanying drawings.

According to an aspect of an embodiment of the present disclosure, an optical module is provided. The optical module is suitable for use in head-mounted display (HMD) devices, such as AR head-mounted display devices. The AR head-mounted display device may include, for example, AR smart glasses or AR smart helmets, and the embodiments of the present disclosure do not limit the specific form of the head-mounted display device.

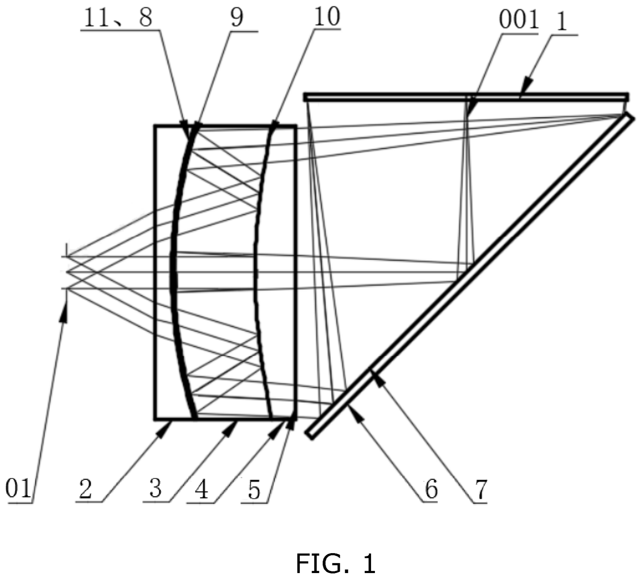

The optical module provided in the present disclosure embodiment, as shown in Fig. 1, includes a display 1, a first imaging element, and a second imaging element. The first imaging element includes a lens group arranged along the same optical axis, and a beam splitter 10, a first phase retarder 9, and a first polarizing reflector 8 sequentially disposed between the optical paths of the lens group. The optical axis of the first imaging element forms a first angle with the central axis of the display 1, and the optical power $\phi_1$ of the first imaging element is zero. The second imaging element includes a turning element 6 and a second polarizing reflector 7 disposed on either side of the turning element 6. The second imaging element is located between the display 1 and the first imaging element, and forms a second angle with the optical axis of the first imaging element.

According to the above embodiment of the present disclosure, a novel AR near-eye display optical module is provided. Referring to Fig. 1, the optical architecture shown therein includes a real display 1, a turning element 6 provided with a polarizing reflector (i.e., a second polarizing reflector 7), and a group of folded optical path modules. The entire optical architecture achieves that virtual image light ray and real image light ray transmit through the shared optical path by combining the folded optical path and the turning element 6, thereby realizing augmented reality display with excellent imaging quality.

The optical module provided in the above embodiments of the present disclosure has two optical propagation paths. For the virtual optical path: the display 1 emits a first light ray 001, that is, a virtual ray. This first light ray 001 is, for example, circularly polarized light. After the first light ray 001 is transmitted to the second polarizing reflector 7, its horizontal polarization component is reflected by the second polarizing reflector 7, becoming horizontally linearly polarized light, and then enters the first imaging element. In the first imaging element, the first light ray 001 forms a zigzag reflection due to the folded optical path design. During this process, the first light ray 001 is continuously amplified and transmitted, eventually it enters the aperture 01. For the real optical path: a second ray (real light ray) from the external real world passes through the turning element 6, and after passing through the second polarizing reflector 7, it becomes vertically linear polarized light, then it passes through the first imaging element with zero optical power, subsequently, it enters the aperture 01. Through the combination of the virtual and real optical paths, the optical module provided in the present disclosure embodiment forms an AR optical scheme.

The optical module provided in the present disclosure embodiment designs the first imaging element at a side close to the aperture 01 (e.g., the human eye) as a folded optical path. For example, the first light ray 001 emitted by the display 1 can achieve image amplification and transmission within a limited space, thereby reducing the total optical length of the entire optical module, which is beneficial for reducing the size of the head-mounted display device and making it easier for users to wear.

Traditional AR near-eye display optical modules typically employ a diffractive waveguide scheme. However, the present disclosure utilizes a scheme combining a folded optical path with a turning element 6. The optical solution provided in the embodiment of the present disclosure can improve the display effect of the forming image, thereby enhancing the user's visual experience.

In the optical module of the present disclosure embodiment, the display 1 is capable of emitting a first light ray 001 for imaging display, and the second imaging element is disposed in the light emission direction of the display 1.

The first light ray 001 emitted by passing through the display 1 has, for example, a circularly polarized state.

The display 1 is configured to emit visible light in at least one wavelength.

For example, the display 1 can emit visible light (such as RGB) of various different wavelengths to form a color image.

Optionally, a screen protection glass is provided on the light-emitting surface of the display 1. The screen protection glass can be used to protect the display 1.

In the optical module of this embodiment, the optical axis of the first imaging element is perpendicular to the central axis of the display 1, that is, the first angle between the optical axis of the first imaging element and the central axis of the display 1 is 90°; and the turning element 6 is located between the display 1 and the first imaging element, and is disposed to incline at 45° with respect to both the central axis of the display 1 and the optical axis of the first imaging element, that is, the second angle between the turning element 6 and the optical axis of the first imaging element is 45°. It should be noted that this embodiment is only one preferred embodiment, and those skilled in the art can conceive of other angle arrangement that can achieve the technical effects of the present disclosure.

The optical solution of the present disclosure combines the folded optical path with the turning element 6. By using the turning element 6 to arrange some components to turn, the volume occupied in the horizontal direction is changed, and the volume saved can be used to place other components.

The optical module provided in the above embodiments of the present disclosure introduces a folded optical path into the AR optical system.

Specifically, the optical module provided in the above embodiments of the present disclosure incorporates a beam splitter 10, a first phase retarder 9, and a first polarizing reflector 8, which can be used to form the folded optical path at a side close to aperture 01.

The beam splitter 10 functions to split light, allowing a portion of the first light ray 001 to pass through, whereas the other portion is reflected. In other words, the beam splitter 10 allows a portion of the light to pass through, whereas the other portion is reflected. The beam splitter 10 is, for example, a semi-transmissive, semi-reflective film.

It should be noted that the reflectivity and transmittance of the beam splitter 10 can be flexibly adjusted according to specific needs, and this embodiment does not impose any restrictions on this.

The first phase retarder 9 is, for example, a quarter wave plate. Of course, the first phase retarder 9 can also be configured as other phase retarder plates, such as a half-wave plate, as needed.

The first phase retarder 9 can be used to change the polarization state of light ray. For example, the first phase retarder 9 can be used to convert linearly polarized light into circularly polarized light, or convert circularly polarized light into linearly polarized light.

The first polarizing reflector 8 may be disposed on the side of the first phase retarder 9 far away from the beam splitter 10, such that the first phase retarder 9 is located between the beam splitter 10 and the first polarizing reflector 8.

The first polarizing reflector 8 is, for example, a polarizing reflective film. The polarizing reflective film has a polarization transmission direction, which can also be understood as a transmission axis.

For example, when the polarization state of the first light ray 001 emitted by the display 1 is in the same direction as the transmission axis of the first polarizing reflector 8, the first light ray 001 can pass through, whereas when the polarization state of the first light ray 001 is not in the same direction as the transmission axis, the first light ray 001 will be reflected.

Optionally, the beam splitter 10, the first phase retarder 9, and the first polarizing reflector 8 can be independent optical device or film structure. If the first polarizing reflector 8 has the film structure, the first polarizing reflector 8 can be bonded or coated.

In some examples of the present disclosure, see Fig. 1, the optical power $\phi_2$ of the second imaging element is zero.

In other words, in the optical module provided in the present disclosure embodiment, the optical power of both the first imaging element and the second imaging element can be set to zero.

For example, the lens group in the first imaging element can form a flat lens group which has no optical power, and the turning element 6 in the second imaging element can be configured as a flat element which has no optical power. In this way, the real image formed by the second light rays projected from the outside world after passing through the turning element 6 which has no optical power and the flat lens group which has no optical power will not be distorted or warped, thereby improving the display effect of the optical module.

In some examples of the present disclosure, referring to Fig. 1, the optical module further includes a second phase retarder 5, which is located between the second polarizing reflector 7 and the lens group.

According to the optical module provided in the embodiments of the present disclosure, as for its virtual optical path, the first light ray 001 emitted by the display 1 is transmitted to the second polarizing reflector 7, and the horizontal polarization component is reflected by the second polarizing reflector 7 to become horizontally linearly polarized light, and after passing through the second phase retarder 5, it can become left-hand circularly polarized light, and then it enters the first imaging element. The left-hand circularly polarized light can be reflected back within the first imaging element and finally form vertically linearly polarized light and then enter the aperture 01.

As for the real optical path: the second ray formed by the external world passes through the turning element 6, then passes through the second polarizing reflector 7, to become vertically linear polarized light. After passing through the second phase retarder 5, it becomes right-hand circularly polarized light. The right-hand circularly polarized light can pass through the first imaging element which has no optical power, and after being processed into vertically linear polarized light by the internal first phase retarder, it enters the aperture 01.

The optical module provided in the present disclosure embodiment can realize an AR optical scheme based on the virtual optical path and the real optical path described above.

In some examples of the present disclosure, referring to Fig. 1, the lens group includes at least two lenses cemented to each other to form a cemented lens group, and the cemented lens group forms a flat lens group which has zero optical power.

Based on the above example, referring to Fig. 1, the first imaging element is located on a side close to aperture 01, and the first imaging element is an optical structure with a group of folded optical paths. the introduction of the cemented lens group can reduce chromatic aberration and improve image quality. In addition, the introduction of the cemented lens group can reduce the assembly difficulty of the optical module and also beneficial for reducing the size of the optical module along the optical axis direction.

Referring to Fig. 1, the cemented lens group is located at one side of the aperture 01. The two opposing surfaces of this cemented lens group facing outward can be designed as planes, thus forming a flat lens group having no overall optical power by such a combination. When a second light ray from the outside world enters, the second light ray can be fused with the first light ray 001 processed by the folded optical, to form the AR scheme.

Of course, the lens group in the first imaging element includes, but is not limited to, the above-mentioned cemented lens group, that is, the lens group can also be composed of at least two separate lenses.

In some examples of the present disclosure, referring to Fig. 1, the lens group includes a first lens 2, a second lens 3 and a third lens 4 cemented in sequence. The combined optical power of the first lens 2, the second lens 3 and the third lens 4 is zero, and the surface of the first lens 2 facing away from the second lens 3 and the surface of the third lens 4 facing away from the second lens 3 have the same surface type.

Based on the above example, this is a preferred solution. As for a folded optical path composed of three lenses, it is beneficial to reduce the size along the optical axis and improve the imaging quality.

Of course, as for the optical module provided in the present disclosure embodiment, the number of lenses in the first imaging element can be two, three, or more. The plurality of lenses can be cemented together to form a lens group having no optical power. Based on this, in the lens group, the optical surface closest to the aperture 01 and the optical surface furthest from the aperture 01 have the same surface type, for example, both are planar or both have the same surface type, and are curved to the same side.

In some examples of the present disclosure, referring to Fig. 1, the second phase retarder 5 is located within the first imaging element and disposed on the surface of the third lens 4 facing away from the second lens 3.

Based on the above example, there is no need to introduce an additional flat plate support to support the second phase retarder 5 in the optical path architecture, which can simplify the optical architecture and reduce production costs.

In some examples of the present disclosure, referring to Fig. 1, the second polarizing reflector 7 is disposed on the surface of the turning element 6 close to the display 1.

Of course, the second polarizing reflector 7 can also be disposed on the surface of the turning element 6 far away from the display 1, and the placement position can be flexibly selected according to assembling needs.

In some examples of the present disclosure, the turning element 6 is a flat element, which has zero optical power.

The structure of the turning element 6 can be the flat plate structure in the examples above.

However, the turning element 6 is not limited to the flat structure, but can also be a free-form curved, a spheric, or an aspherical structure, or the like.

In some examples of the present disclosure, referring to Fig. 1, the beam splitter 10 is cemented between the second lens 3 and the third lens 4, and the first phase retarder 9 and the first polarizing reflector 8 are stacked and cemented between the second lens 3 and the first lens 2.

Referring to Fig. 1, the first phase retarder 9 and the first polarizing reflector 8 are stacked on each other. The transmission axis of the first polarizing reflector 8 forms a 45° angle with the fast axis or slow axis of the first phase retarder 9. The first phase retarder 9 and the first polarizing reflector 8 operate in collaboration to resolve and transmit the light ray.

According to the above example, the first polarizing reflector 8 and the first phase retarder 9 are located on the same side of the second lens 3, this structure facilitates the alignment adjustment between the first polarizing reflector 8 and the first phase retarder 9.

The first phase retarder 9 is, for example, a quarter wave plate. The first polarizing reflector 8 is, for example, a linear polarizer, specifically a linearly polarizing reflective film.

Optionally, the optical module further includes a first polarizer 11, which is disposed at the side of the first polarizing reflector 8 far away from the first phase retarder 9, wherein the first polarizer 11, the first polarizing reflector 8, and the first phase retarder 9 are stacked in sequence to form a composite film.

According to the above example, the introduction of the first polarizer 11 can reduce stray light.

In some examples of the present disclosure, the optical module is applied to an AR device.

In some examples of the present disclosure, when the optical module is applied to the AR device, the optical module has two light propagation paths, one of which is a virtual light path.

As for the virtual optical path, referring to Fig. 1, the first light ray 001 is emitted by the display 1 and is transmitted to the second polarizing reflector 7; the second polarizing reflector 7 reflects the horizontal polarization component of the first light ray 001 to form horizontally linearly polarized light, and the horizontally linearly polarized light passes through the second phase retarder 5; the second phase retarder 5 converts the horizontally linearly polarized light into left-handed circularly polarized light, the left-handed circularly polarized light is reflected back between the beam splitter 10 and the first polarizing reflector 8 of the first imaging element, and finally exits to the aperture 01 by passing through the first lens 2.

Specifically, the first light ray 001 emitted by the display 1 is transmitted to the second polarizing reflector 7, then the horizontal polarization component is reflected by the second polarizing reflector 7 to become horizontally linearly polarized light, and after passing through the second phase retarder 5, it becomes left-hand circularly polarized light. It then passes through the third lens 4, the beam splitter 10, and the second lens 3 in sequence, and after passing through the first phase retarder 9, it becomes horizontally linearly polarized light. Then, it is reflected by the first polarizing reflector 8, and after passing through the first phase retarder 9, it becomes left-hand circularly polarized light. After passing through the third lens 4, it is reflected by the beam splitter 10 to become right-hand circularly polarized light. After passing through the third lens 4 and the first phase retarder 9, it becomes vertically linearly polarized light. After passing through the first polarizing reflector 8 and the first lens 2, it enters the aperture 01.

As for the actual optical path: the second light ray from the outside is incident into the turning element 6, the second polarizing reflector 7 modulates the second light ray to vertically linear polarized light, the vertically linear polarized light passes through the second phase retarder 5; the second phase retarder 5 converts the vertically linear polarized light into right-hand circularly polarized light, the right-hand circularly polarized light is incident into the first imaging element, and is converted into vertically linear polarized light by the first phase retarder 9, and after passing through the first polarizing reflector 8 and the first lens 2, the converted vertically linear polarized light is incident on the aperture 01.

Specifically, the second light from the outside is incident into the turning element 6 at first, and after passing through the second polarizing reflector 7, it becomes vertically linear polarized light. Then, it passes through the second phase retarder 5 to become right-hand circularly polarized light. It then passes through the third lens 4, the beam splitter 10 and the second lens 3 in the first imaging element in sequence, and subsequently passes through the first phase retarder 9, to become vertically linear polarized light. Finally, the converted vertically linear polarized light passes through the first polarizing reflector 8 and the first lens 2 and enters the aperture 01.

In the optical architecture provided in the present disclosure embodiment, by combining the folded optical path and the turning element 6, it can realize an AR module scheme in which the virtual image and the display image share the optical path.

In some examples of the present disclosure, the focal length of the optical module is F, and the thickness of the first imaging element along the optical axis is D, then D and F satisfy: $0.3 \leq D/F \leq 0.6$.

According to the above example, the optical module provided in the embodiments of the present disclosure can adjust the total system length of the optical module by controlling the thickness of the lens group in the first imaging element.

In some examples of the present disclosure, referring to Fig. 1, the absolute values of the radius of curvature in the two surfaces of the first lens 2 and the second lens 3 cemented to each other are both C1, and the absolute values of the radius of curvature in the two surfaces of the second lens 3 and the third lens 4 cemented to each other are both C2. Then,

$$-0.6 \leq (C1-C2)/C1 \leq 0.6.$$

It should be noted that the absolute values of the radii of curvature of the two surfaces of the first lens 2 and the second lens 3 cemented to each other are the same, and the absolute values of the radii of curvature of the two surfaces of the second lens 3 and the third lens 4 cemented to each other are also the same. By controlling the radii of curvature of the two cemented surfaces, it is beneficial to ensure imaging quality while reducing the total optical length of the optical module.

In a specific example, referring to Fig. 1, the optical module includes a display 1, a first imaging element, and a second imaging element, wherein, the optical axis of the first imaging element forms a first angle with the central axis of the display, the second imaging element is located between the display and the first imaging element and forms a second angle with the optical axis of the first imaging element;

The first imaging element includes a first lens 2, a second lens 3, and a third lens 4 cemented in sequence. The combined optical power of the first lens 2, the second lens 3, and the third lens 4 is zero. The surface of the first lens 2 facing away from the second lens 3 and the surface of the third lens 4 facing away from the second lens 3 have the same surface type, both of which are planar.

Furthermore, the beam splitter 10 is cemented and disposed between the second lens 3 and the third lens 4, and the first phase retarder 9 and the first polarizing reflector 8 are stacked and cemented between the second lens 3 and the first lens 2; the optical module further includes a second phase retarder 5, the second phase retarder 5 is located inside the first imaging element and disposed on the surface of the third lens 4 facing away from the second lens 3.

The second imaging element includes a turning element 6 and a second polarizing reflector 7. The second polarizing reflector 7 is disposed on the surface of the turning element 6 close to the display 1. The turning element 6 is a flat element having zero optical power.

Based on the specific examples above, the specific optical parameters involved can be shown in Table 1 below.

Table 1

| Components | Material | Surface | Thickness/ Interval (mm) | Radius of curvature (mm) | 4th order aspherical coefficient | 6th order aspherical coefficient | 8th order aspheric coefficient |
|---|---|---|---|---|---|---|---|
| Aperture 01 | / | / | 11 | Inf | / | / | / |
| First lens 2 | APEL | Front surface | 2.0 | Inf | / | / | / |
| | | Rear surface | 0 | 60.0 | 4.30E-007 | -4.50E-010 | / |
| First polarizing reflector 8 | / | Front surface | 0.08 | 60.0 | 4.30E-007 | -4.50E-010 | / |
| | | Rear surface | 0 | 60.0 | 4.30E-007 | -4.50E-010 | / |
| First phase retarder 9 | / | Front surface | 0.08 | 60.0 | 4.30E-007 | -4.50E-010 | / |
| | | Rear surface | 0 | 60.0 | 4.30E-007 | -4.50E-010 | / |
| Second lens 3 | APEL | Front surface | 10.0 | 60.0 | 4.30E-007 | -4.50E-010 | / |
| | | Rear surface | 0 | 73.6 | 2.17E-008 | -1.7E-010 | 4.11E-011 |
| Third lens 4 | APEL | Front surface | 5.0 | 73.6 | 2.17E-008 | -1.7E-010 | 4.11E-011 |
| | | Rear surface | 0 | Inf | / | / | / |
| Second phase retarder 5 | / | Front surface | 0.08 | Inf | / | / | / |
| | | Rear surface | 21.0 | Inf | / | / | / |
| Second polarizing reflector 7 | APEL | Front surface | 0.08 | Inf | / | / | / |
| | | Rear surface | -21.3 | Inf | / | / | / |
| Display 1 | BK7 | Front surface | 1 | Inf | / | / | / |
| | | Rear surface | 0 | Inf | / | / | / |
| Turning element 6 | PMMA | Front surface | 2 | Inf | / | / | / |
| | | Rear surface | 0 | Inf | / | / | / |

In Table 1 above, the surface of each optical device that is close to the aperture 01 is the front surface, and the surface that is far away from the aperture 01 is the rear surface.

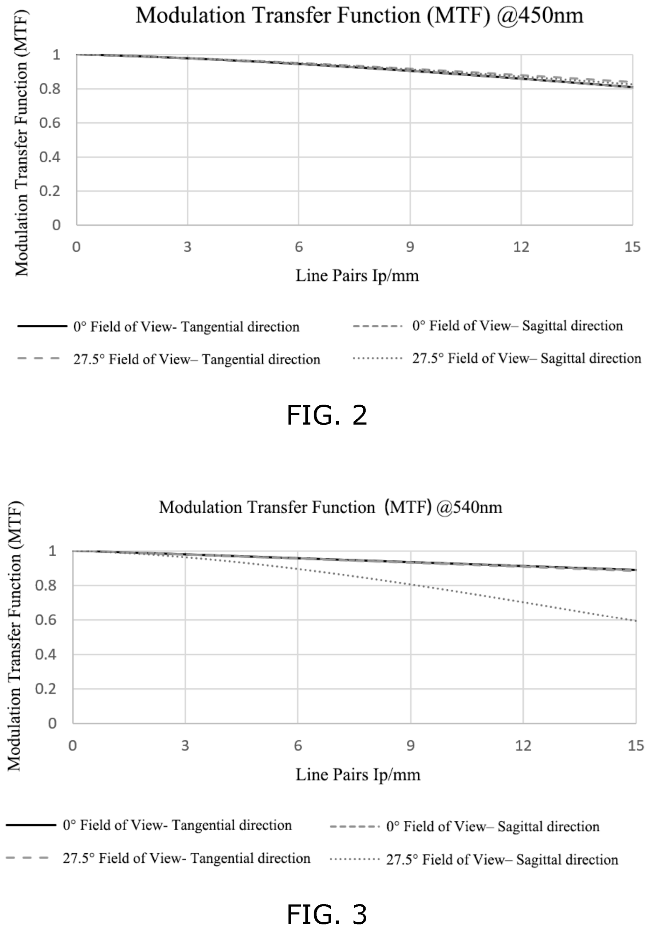

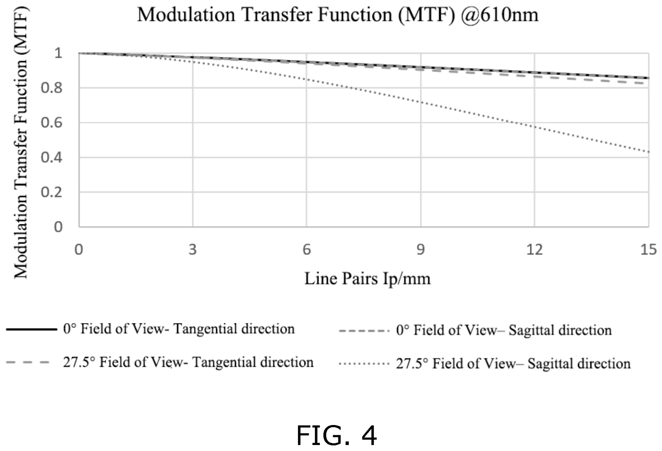

Figs. 2, 3, and 4 show the modulation transfer function (MTF) curves of the optical module at 450nm, 540nm, and 610nm, respectively. From Figs. 2 to 4, it can be seen that:

At a spatial frequency of 15 lp/mm, at a wavelength of 450 nm, the MTF value of the optical module is higher than 0.80, and at a wavelength of 540 nm, the MTF value of the optical module is higher than 0.60, and at a wavelength of 630 nm, the MTF value of the optical module is higher than 0.40.

The optical module provided in the present disclosure embodiment can improve imaging quality.

According to another embodiment of the present disclosure, a head-mounted display device is provided.

The head-mounted display device includes a housing and an optical module as described above.

The head-mounted display device includes AR smart glasses or AR smart helmets, etc., and the present disclosure embodiment does not limit this.

The specific implementation of the head-mounted display device in the present disclosure can refer to the above-described embodiments of the optical module. Therefore, it has at least all the beneficial effects brought about by the technical solutions of the above embodiments, and will not be described in detail here.

The above embodiments mainly describe the differences between the various embodiments. As long as the different optimization features between the various embodiments are not contradictory, they can be combined to form a better embodiment. For the sake of brevity, they will not be elaborated here.

While specific embodiments of the present disclosure have been described in detail by way of examples, those skilled in the art should understand that the above examples are for illustrative purposes only and are not intended to limit the scope of the present disclosure. Those skilled in the art should understand that modifications can be made to the above embodiments without departing from the scope and spirit of the present disclosure. The scope of the present disclosure is defined by the appended claims.

**Claims**

1. An optical module, comprising:

   a display (1);
   a first imaging element comprising a lens group arranged along a same optical axis, and a beam splitter (10), a first phase retarder (9) and a first polarizing reflector (8) arranged sequentially between lens elements of the lens group, wherein an optical axis of the first imaging element forms a first angle with a central axis of the display (1), and an optical power $\phi_1$ of the first imaging element is zero; and
   a second imaging element comprising a turning element (6) and a second polarizing reflector (7) disposed on either side of the turning element (6), wherein the second imaging element is located between the display (1) and the first imaging element and forms a second angle with the optical axis of the first imaging element.

2. The optical module according to claim 1, wherein an optical power $\phi_2$ of the second imaging element is zero.

3. The optical module according to claim 1 or 2, wherein the optical module further comprises a second phase retarder (5), and the second phase retarder (5) is located between the second polarizing reflector (7) and the lens group.

4. The optical module according to claim 3, wherein the lens group comprises at least two mutually cemented lenses to form a cemented lens group, and the cemented lens group forms a flat lens group which has zero optical power.

5. The optical module according to claim 4, wherein the lens group comprises a first lens (2), a second lens (3) and a third lens (4) cemented in sequence, a combined optical power of the first lens (2), the second lens (3) and the third lens (4) is zero, and a surface of the first lens (2) facing away from the second lens (3) and a surface of the third lens (4) facing away from the second lens (3) have the same surface type; and
   the surface of the first lens (2) facing away from the second lens (3) and the surface of the third lens (4) facing away from the second lens (3) are both flat surface, or curved surface and bent to the same side.

6. The optical module according to claim 5, wherein the second phase retarder (5) is located within the first imaging element and is disposed on the surface of the third lens (4) facing away from the second lens (3).

7. The optical module according to claim 6, wherein the second polarizing reflector (7) is disposed on a surface of the turning element (6) close to the display (1).

8. The optical module according to claim 1 or 2, wherein the turning element (6) is a flat element, which has zero optical power.

9. The optical module according to claim 7, wherein the beam splitter (10) is cemented and disposed between the second lens (3) and the third lens (4); and
   the first phase retarder (9) and the first polarizing reflector (8) are stacked and cemented between the second lens (3) and the first lens (2).

10. The optical module according to claim 9, wherein the optical module further comprises a first polarizer (11), the first polarizer (11) is disposed at a side of the first polarizing reflector (8) facing away from the first phase retarder (9); and
    the first polarizer (11), the first polarizing reflector (8), and the first phase retarder (9) are stacked in sequence to form a composite film.

11. The optical module according to claim 9 or 10, wherein the optical module is applied to an AR device.

12. The optical module according to claim 11, wherein the display (1) emits a first light ray (001) and transmits the first light ray (001) to the second polarizing reflector (7); and

    the second polarizing reflector (7) reflects a horizontal polarization component of the first light ray (001) to form horizontally linearly polarized light, the horizontally linearly polarized light passes through the second phase retarder (5); and

the second phase retarder (5) converts the horizontal linearly polarized light into left-hand circularly polarized light, the left-hand circularly polarized light is reflected back between the beam splitter (10) of the first imaging element and the first polarizing reflector (8), and finally exits to the aperture (01) by passing through the first lens (2).

13. The optical module according to claim 12, wherein a second light from outside is incident into the turning element (6), the second polarizing reflector (7) modulates the second light into vertically linear polarized light, the vertically linear polarized light passes through the second phase retarder (5); and

the second phase retarder (5) converts the vertically linear polarized light into right-hand circularly polarized light, the right-hand circularly polarized light is incident into the first imaging element, and is converted into vertically linear polarized light by the first phase retarder (9), and after passing through the first polarizing reflector (8) and the first lens (2), the converted vertically linear polarized light is incident on the aperture (01).

14. The optical module according to claim 7, wherein focal length of the optical module is F, and thickness of the first imaging element along the optical axis direction is D, D and F satisfy:

$$0.3 \leq D/F \leq 0.6.$$

15. The optical module according to claim 5, wherein absolute values of radii of curvature of two surfaces of the first lens (2) and the second lens (3) cemented to each other are C1, and absolute values of radii of curvature of two surfaces of the second lens (3) and the third lens (4) cemented to each other are C2, $-0.6 \leq (C1-C2)/C1 \leq 0.6$.

16. A head-mounted display device, comprising:

a housing; and
the optical module of any one of claims 1-15.

FIG. 1

## Modulation Transfer Function (MTF) @450nm

——— 0° Field of View- Tangential direction ------ 0° Field of View– Sagittal direction

— – – 27.5° Field of View– Tangential direction ·········· 27.5° Field of View– Sagittal direction

## FIG. 2

## Modulation Transfer Function (MTF) @540nm

——— 0° Field of View- Tangential direction ------ 0° Field of View– Sagittal direction

— – – 27.5° Field of View- Tangential direction ·········· 27.5° Field of View– Sagittal direction

## FIG. 3

FIG. 4

## INTERNATIONAL SEARCH REPORT

| | International application No. |
|---|---|
| | **PCT/CN2024/110324** |

### A. CLASSIFICATION OF SUBJECT MATTER

G02B27/01(2006.01)i

According to International Patent Classification (IPC) or to both national classification and IPC

### B. FIELDS SEARCHED

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNTXT: CJFD: WPABSC; ENTXT; DWPI: 增强现实, 近眼, 头戴, 视场角, 透镜, 光焦度, 相位延迟, 分光, 偏振反射, 夹角, 垂直, 正交, 棱镜, 偏折, 转折, NED, HMD, VR, NEAR 5D EYE?, ANGLE?, FOV. FOCAL+ W POWER, PHASE W DELAY +. PHASE W RETARD+, SPLIT+, SPECTRA+, POLARIZ+ 3D REFLECT+, VERTIC+, PERPEND+, ORTHO+

### C. DOCUMENTS CONSIDERED TO BE RELEVANT

| Category* | Citation of document, with indication, where appropriate, of the relevant passages | Relevant to claim No. |
|---|---|---|
| PX | CN 117148580 A (GOERTEK OPTICAL TECHNOLOGY CO., LTD.) 01 December 2023 (2023-12-01) <br> claims 1-16 | 1-16 |
| A | CN 114545626 A (GOERTEK OPTICAL TECHNOLOGY CO., LTD.) 27 May 2022 (2022-05-27) <br> description, paragraphs [0040]-[0063], and figures 1-3 | 1-16 |
| A | CN 116430654 A (GOERTEK OPTICAL TECHNOLOGY CO., LTD.) 14 July 2023 (2023-07-14) <br> entire document | 1-16 |
| A | CN 116540476 A (GOERTEK OPTICAL TECHNOLOGY CO., LTD.) 04 August 2023 (2023-08-04) <br> entire document | 1-16 |
| A | CN 209311805 U (ZHEJIANG CRYSTAL-OPTECH CO., LTD.) 27 August 2019 (2019-08-27) <br> entire document | 1-16 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 October 2024** | **13 November 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/110324**

| C. | DOCUMENTS CONSIDERED TO BE RELEVANT | |
|---|---|---|
| Category* | Citation of document, with indication, where appropriate, of the relevant passages | Relevant to claim No. |
| A | CN 218675347 U (GOERTEK OPTICAL TECHNOLOGY CO., LTD.) 21 March 2023 (2023-03-21)<br>entire document | 1-16 |
| A | US 11372239 B1 (FACEBOOK TECHNOLOGIES, L.L.C.) 28 June 2022 (2022-06-28)<br>entire document | 1-16 |
| A | US 2017176749 A1 (3M INNOVATIVE PROPERTIES CO.) 22 June 2017 (2017-06-22)<br>entire document | 1-16 |

**INTERNATIONAL SEARCH REPORT**
Information on patent family members

International application No.

**PCT/CN2024/110324**

| Patent document cited in search report | | | Publication date (day/month/year) | Patent family member(s) | | | Publication date (day/month/year) |
|---|---|---|---|---|---|---|---|
| CN | 117148580 | A | 01 December 2023 | None | | | |
| CN | 114545626 | A | 27 May 2022 | None | | | |
| CN | 116430654 | A | 14 July 2023 | None | | | |
| CN | 116540476 | A | 04 August 2023 | None | | | |
| CN | 209311805 | U | 27 August 2019 | None | | | |
| CN | 218675347 | U | 21 March 2023 | None | | | |
| US | 11372239 | B1 | 28 June 2022 | None | | | |
| US | 2017176749 | A1 | 22 June 2017 | KR | 20160143749 | A | 14 December 2016 |
| | | | | JP | 2017514169 | A | 01 June 2017 |
| | | | | JP | 6637440 | B2 | 29 January 2020 |
| | | | | US | 10545340 | B2 | 28 January 2020 |
| | | | | WO | 2015157016 | A1 | 15 October 2015 |
| | | | | US | 2020150439 | A1 | 14 May 2020 |
| | | | | US | 11675191 | B2 | 13 June 2023 |
| | | | | EP | 3129822 | A1 | 15 February 2017 |

Form PCT/ISA/210 (patent family annex) (July 2022)